# EUROPEAN PATENT SPECIFICATION

(11) **EP 2 001 157 B1**
(45) Date of publication and mention of the grant of the patent: **05.01.2011**
(21) Application number: 07010991.3
(22) Date of filing: 04.06.2007
(51) Int. Cl.: H04L 12/24

(54) **Method for data communication and device as well as communication system**
Verfahren zur Datenkommunikation und Vorrichtung sowie Kommunikationssystem
Procédé de communication de données, dispositif et système de communication

(43) Date of publication of application: 10.12.2008
(73) Proprietor: Nokia Siemens Networks Oy, 02610 Espoo (FI)
(72) Inventor: Chiriyamkandath Anthony, Daiju, 560043 Bangalore (IN); Haggerty, Paul, 01742 Concord, MA (US); Simmet, Franz, 88830 Schwabmünchen (DE)
(74) Representative: Schober, Ralf Stefan

(56) References cited:
- US-A1- 2003 140 132
- US-B1- 6 230 198
- US-B1- 6 826 608
- "Digital cellular telecommunications system (Phase 2+); Universal Mobile Telecommunications System (UMTS); Telecommunication management; Fault Management; Part 3: Alarm Integration Reference Point (IRP): Common Object Request Broker Architecture (CORBA) Solution Set (SS) (3GPP TS 32.111-3 version 6.6" ETSI STANDARDS, EUROPEAN TELECOMMUNICATIONS STANDARDS INSTITUTE, SOPHIA-ANTIPO, FR, vol. 3-SA5, no. V660, June 2006 (2006-06), XP014035694 ISSN: 0000-0001

## Description

The invention relates to a method for data communication, to a device and to a communication system comprising such a device.

The concept of alarming is widely used in IT and telecommunications networks to notify erroneous conditions or any other event that may require attention and/or intervention of an operator.

Alarms are preferably emitted by managed network elements and they are sent to management systems, which, e.g., process, store and display the alarms to the operator.

US Patent Application Publication US 2003/0140132 A1, 24.7.2003, discloses a method for uploading static configuration information from a network element after an upload request from a NMS to the network element.

An alarm in particular comprises:
- dynamic information, which is specific for the actual alarm instance, e.g., an exact date, time or location (port, process, etc.) of the current problem;
- static information, which is independent of the actual alarm instances, e.g., textual description of the alarm, follow up or suggested repair actions.

However, disadvantageously static alarm information is sent along with every instance of an alarm. This leads to significant network traffic to be transmitted throughout a managed network. Furthermore, for some types of alarm, the size for an alarm notification is limited thereby restricting the available data size for static information to be transmitted. Also, the static alarm information regarding all alarms is not available for the operator at the management system (lack of overview).

It is another disadvantage that in case of preinstalled alarm information at the management system, a re-installation is required each time a static alarm information of a managed element changes, e.g., due to an update or a new alarm added.

The object to be solved is to overcome the disadvantages as stated before and to provide an efficient communication between a management system and at least one network element (managed element).

This problem is solved according to the features of the independent claims. Further embodiments result from the depending claims.

In order to overcome this problem, a method for data communication between a management system and a network element is provided according to the features of claim 1.

Hence, based on the connection set up between the management system and the network element, the management systems sends a message to the network element, said message may initiate the network element sending static information to the management system.

It is to be noted that the network element as referred to may comprise or be a managed (network) element, an element manager or an element management system (EMS).

The static information comprises a textual description of at least on event and an identifier for each such at least one event.

Hence, there is a mapping between the event (that may be an alarm) and the textual description of the event. This allows the network element to notify an alarm to the network management system, in particular by transmitting said identifier together with dynamic alarm information such as an actual alarm instance, e.g., an exact date and/or time and/or location (port, process, line card, etc.) of the problem. The identifier received at the management system can be translated into a textual description relating to the alarm instance in general (e.g., regarding its meaning and/or what to do in case such an alarm is reported) and hence the full information regarding the alarm comprising dynamic alarm information as well as static alarm information can be displayed to the operator.

The event is notified by the network element (to the management system) by sending dynamic event information together with said identifier thereby enabling the management system to produce static information related to said identifier.

In an embodiment, said static information comprises static alarm information.

As an advantage, the static alarm information is made available to the management system and hence informs an operator at the management system about all alarms that may occur.

In a further embodiment, the event comprises an alarm event that is (to be) notified to the management system.

In a next embodiment, the connection between the management system and the network element is associated with a Common Object Request Broker Architecture (CORBA).

It is also an embodiment that the connection is associated with a file transfer protocol (FTP).

Pursuant to another embodiment, the message sent by the management system comprises a request, in particular an update request regarding static alarm information.

According to an embodiment, the management system is a network management system.

According to another embodiment, the network element is of the following type:
- a managed element;
- a network node;
- a gateway;
- a switch;
- a terminal;
- a relay node;
- a router;
- an edge router.

Further, the problem stated above is solved by a device for communicating with a management system according to the features of claim 9.

Such device preferably is a network element, in particular a managed network element.

In addition, the problem is solved by a device for communicating with a network element according to the features of claim 10.

Such device preferably is a management system.

Furthermore, the problem is solved by a communication system according to the features of claim 11.

Embodiments of the invention are shown and illustrated in the following figures:
- Fig.1: shows a graph comprising a network management system and several managed elements to illustrate an automatic upload of static alarm information to a file system at the network management system;
- Fig.2: shows a message chart between a network management system and a managed element showing as how to provide static information to the network management system.

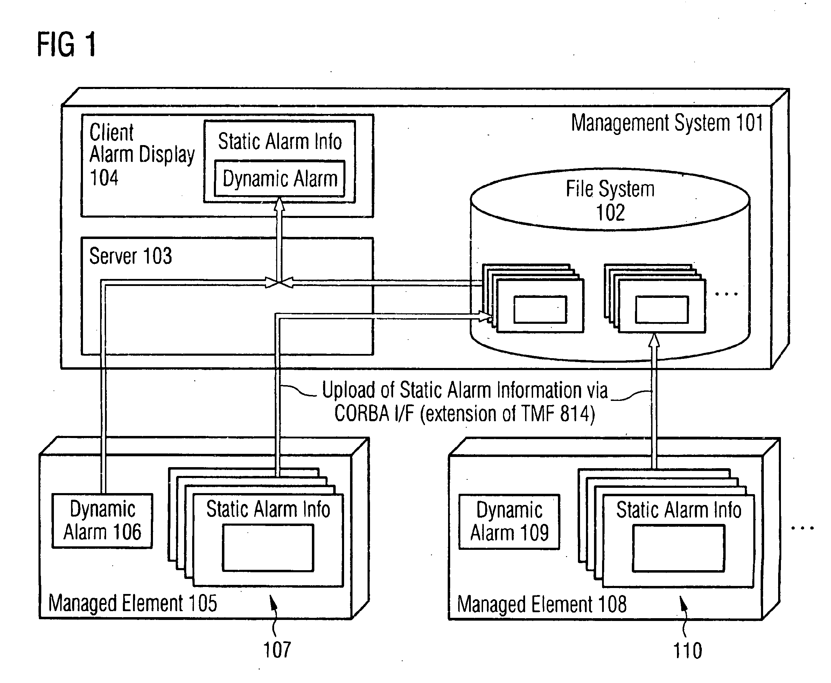

**Fig.1** shows a diagram comprising a Management System 101 with a File System 102, a Server 103 and a Client Alarm Display 104. Furthermore, a Managed Element 105 is shown comprising a Dynamic Alarm component 106 and several Static Alarm Information records 107. Another Managed Element 108 is shown also comprising a Dynamic Alarm component 109 and several Static Alarm Information records 110.

The respective Static Alarm Information records 107 and 110 of Managed Element 105 and 108 are uploaded into the File System 102 of the Management System 101. Such upload can be processed based on a connection such as a CORBA I/F interface, which may be realized as an extension to TMF 814.

Thus, the records 107 and 110 of both Managed Elements 105 and 108 are once uploaded and then be accessible at the Management System 101.

In case a Managed Element 105 becomes aware of an alarm to be notified to the Management System 101, the Dynamic Alarm data 106 is sent to the Server 103 of the Management System 101. The Dynamic Alarm data 106 comprises an identifier of the alarm type that allows the Server 103 to access additional data related to this particular alarm type from its File System 102. The Server 103 further compiles the alarm notification comprising dynamic data sent from the Dynamic Alarm component 106 and static data that is obtained from the File System 102 (records are previously entered into said File System 102 as described). The full notification is forwarded from the Server 103 to the Client Alarm Display 104 thereby notifying, e.g., an operator of the alarm of Managed Element 105 with detailed information, i.e. dynamic components and static components.

Advantageously, only dynamic portions in addition to an identifier to a static record are sent from the Dynamic Alarm component 106 to the Management System 101 in case an alarm occurs. This reduces the amount of redundant data to be transferred as the static portion of an alarm remains unchanged and can be addressed by the identifier as described.

Fig.1 can also be summarized as follows:
a) The static alarm information is uploaded at runtime from the Managed Element 105 and/or 108 to the Management System 101 and it is stored in its File System 102.
   Hence, multiple heterogeneous managed elements can be handled. As an interface between the Managed Element 105 or 108 and the Management System 101 an extension of the TMF 814 CORBA interface can be defined.
b) At the Management System 101 the complete alarm information is available by merging the dynamic alarm portion obtained from the Managed Element 105 or 108 with the static portion already available and stored in the File System 102.

The approach presented herewith shows in particular the following advantages:
1) The CORBA interface selected for uploading the static alarm information fits smoothly into a TMF 814 concept for dynamic alarm notifications:
   i) Performance of the data transfer is excellent since the data transfer is binary encoded.
   ii) The CORBA connection between management system and managed element is anyway necessary for dynamic alarm notifications. Hence, it can be reused for uploading the static alarm information as shown. Advantageously, no additional infrastructure (e.g., a setup of user accounts) is required.
2) Static alarm information is separated from the dynamic alarm instance:
   i) The redundant static information of an alarm can be avoided, thus reducing the overall network traffic.
   ii) Furthermore, static information is not limited in size (as opposed to dynamic alarms which are usually limited). This allows each alarm to be described more elaborate, e.g. detailed description or instruction regarding repair actions can be provided.
3) The static alarm information is retrieved at runtime from the managed element:
   i) The overall static alarm information is available to the operator at the management system. Such information can be displayed and also further processed or exported.
   ii) As the alarm information is dynamically uploaded during runtime, changes of the alarm information are transparent to the management system, i.e. there is no need for an update installation of the management system.
   iii) Multiple heterogeneous managed elements and also different versions of a network element can be supported. The static alarm information can be uploaded and stored for each managed element individually.

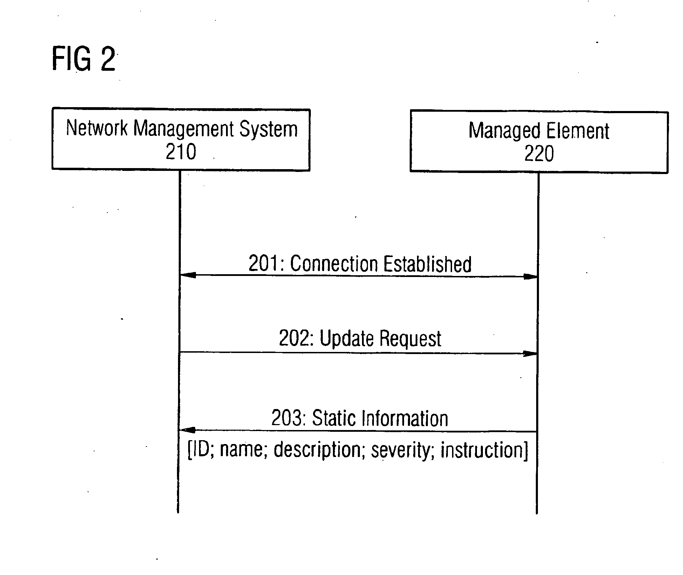

**Fig.2** shows a message chart comprising a Network Management System 210 and a Managed Element 220. The communication exchanged between both entities is based on an existing and already established connection 201, e.g. according to a CORBA interface. The Network Management System 210 sends an Update Request 202 to the Managed Element 220 thereby initiating it to send a Static Information response 203 comprising an identifier ID, a name, a description, a severity indication and an instruction-follow up of the respective static alarm information. This kind of communication can initiated by the Network Management System 210 with each associated Managed Element, thereby setting up the File System as shown in Fig.1 with the alarm information of all available alarms to be notified by said Managed Elements.

## Claims

1. A method for data communication between a management system and a network element comprising the following steps:
- Setting up a connection between the management system and the network element;
- The management system sending a message to the network element utilizing the connection;
- Upon said message of the management system, the network element providing static information to the management system, wherein said static information comprises a textual description of at least one event and an identifier for each such at least one event; and
- The network element notifying an event by sending dynamic event information together with said identifier to enable addressing of the static information at the management system.

2. The method according to claim 1, wherein said static information comprises static alarm information.

3. The method according to claim 1 or 2, wherein said event comprises an alarm event to be notified to the management system.

4. The method according to any of the preceding claims, wherein the connection is associated with a Common Object Request Broker Architecture (CORBA).

5. The method according to any of the preceding claims, wherein the connection is associated with a file transfer protocol (FTP).

6. The method according to any of the preceding claims, wherein said message sent by the management system comprises a request, in particular an update request regarding static alarm information.

7. The method according to any of the preceding claims, wherein the management system is a network management system.

8. The method according to any of the preceding claims, wherein the network element complies to at least one of the following types:
- a managed element;
- a network node;
- a gateway;
- a switch;
- a terminal;
- a relay node;
- a router;
- an edge router.

9. A device for communicating with a management system, the device comprising a processor unit that is equipped with:
- Means for setting up a connection between the management system and the device;
- Means for receiving a message from the management system utilizing the connection;
- Means for, upon said message received from the management system, providing static information to the management system, wherein said static information comprises a textual description of at least one event and an identifier for each such at least one event; and
- Means for notifying an event by sending dynamic event information to the management system together with said identifier to enable addressing of the static information at the management system.

10. A device for communicating with a network element, the device comprising a processor unit that is equipped with:
- Means for setting up a connection between the device and the network element;
- Means for sending a message to the network element utilizing the connection;
- Means for, upon said message sent to the network element, receiving from the network element static information, wherein said static information comprises a textual description of at least one event and an identifier for each such at least one event,
and
- Means for notifying an event by receiving from the network element dynamic event information together with said identifier to enable addressing of the static information at the device.

11. Communication system comprising at least one of each of the devices according to claims 9 and 10.

## Patentansprüche

1. Verfahren zur Datenkommunikation zwischen einem Managementsystem und einem Netzelement, umfassend die folgenden Schritte:
- Erstellen einer Verbindung zwischen dem Managementsystem und dem Netzelement;
- das Managementsystem sendet eine Nachricht an das Netzelement unter Verwendung der Verbindung;
- nach der Nachricht des Managementsystems liefert das Netzelement statische Informationen an das Managementsystem, wobei die statischen Informationen eine textliche Beschreibung von mindestens einem Ereignis und eine Kennung für jedes derartige mindestens eine Ereignis umfassen; und
- das Netzelement meldet ein Ereignis durch Senden von dynamischen Ereignisinformationen zusammen mit der Kennung, um das Adressieren der statischen Informationen bei dem Managementsystem zu ermöglichen.

2. Verfahren nach Anspruch 1, wobei die statischen Informationen statische Alarminformationen umfassen.

3. Verfahren nach Anspruch 1 oder 2, wobei das Ereignis ein an das Managementsystem zu meldendes Alarmereignis umfasst.

4. Verfahren nach einem der vorhergehenden Ansprüche, wobei die Verbindung auf einer Common Object Request Broker Architecture (CORBA) aufsetzt.

5. Verfahren nach einem der vorhergehenden Ansprüche, wobei die Verbindung mit einem FTP (file transfer protocol) assoziiert ist.

6. Verfahren nach einem der vorhergehenden Ansprüche, wobei die von dem Managementsystem gesendete Nachricht eine Anforderung, insbesondere eine Aktualisierungsanforderung hinsichtlich statischer Alarminformationen umfasst.

7. Verfahren nach einem der vorhergehenden Ansprüche, wobei das Managementsystem ein Netzmanagementsystem ist.

8. Verfahren nach einem der vorhergehenden Ansprüche, wobei das Netzelement mindestens einem der folgenden Typen entspricht:
- ein verwaltetes Element;
- ein Netzknoten;
- ein Gateway;
- ein Switch;
- ein Terminal;
- ein Relaisknoten;
- ein Router;
- ein Edge-Router.

9. Einrichtung zum Kommunizieren mit einem Managementsystem, wobei die Einrichtung eine Prozessoreinheit umfasst, die mit Folgendem ausgestattet ist:
- Mittel zum Einrichten einer Verbindung zwischen dem Managementsystem und der Einrichtung;
- Mittel zum Empfangen einer Nachricht von dem Managementsystem unter Verwendung der Verbindung;
- Mittel, um nach der von dem Managementsystem empfangenen Nachricht statische Informationen an das Managementsystem zu liefern, wobei die statischen Informationen eine textliche Beschreibung mindestens eines Ereignisses und eine Kennung für jedes derartige mindestens eine Ereignis umfassen; und
- Mittel zum Melden eines Ereignisses durch Senden von dynamischen Ereignisinformationen an das Managementsystem zusammen mit der Kennung, um das Adressieren der statischen Informationen bei dem Managementsystem zu ermöglichen.

10. Einrichtung zum Kommunizieren mit einem Netzelement, wobei die Einrichtung eine Prozessoreinheit umfasst, die mit Folgendem ausgestattet ist:
- Mittel zum Herstellen einer Verbindung zwischen der Einrichtung und dem Netzelement;
- Mittel zum Senden einer Nachricht an das Netzelement unter Verwendung der Verbindung;
- Mittel, um nach dem Senden der Nachricht an das Netzelement von dem Netzelement statische Informationen zu empfangen, wobei die statischen Informationen eine textliche Beschreibung mindestens eines Ereignisses und eine Kennung für jedes derartige mindestens eine Ereignis umfassen, und
- Mittel zum Melden eines Ereignisses durch Empfangen von dynamischen Ereignisinformationen zusammen mit der Kennung von dem Netzelement, um das Adressieren der statischen Informationen bei der Einrichtung zu ermöglichen.

11. Kommunikationssystem, das mindestens eine jeder der Einrichtungen nach den Ansprüchen 9 und 10 umfasst.

## Revendications

1. Procédé de communication de données entre un système de gestion et un élément de réseau comprenant les étapes suivantes :
- mise en place d'une connexion entre le système de gestion et l'élément de réseau ;
- le système de gestion envoyant un message à l'élément de réseau en utilisant la connexion ;
- suite audit message du système de gestion, l'élément de réseau délivrant une information statique au système de gestion, dans lequel ladite information statique comprend une description textuelle d'au moins un événement et un identifiant pour chaque tel au moins un événement ; et
- l'élément de réseau notifiant un événement en envoyant une information d'événement dynamique ensemble avec ledit identifiant pour permettre l'adressage de l'information statique au niveau du système de gestion.

2. Procédé selon la revendication 1, dans lequel ladite information statique comprend une information d'alarme statique.

3. Procédé selon la revendication 1 ou 2, dans lequel ledit événement comprend un événement d'alarme devant être notifié au système de gestion.

4. Procédé selon l'une quelconque des revendications précédentes, dans lequel la connexion est associée avec une Architecture Commune de Répartition des Requêtes d'Objets (CORBA).

5. Procédé selon l'une quelconque des revendications précédentes, dans lequel la connexion est associée avec un protocole de transfert de fichiers (FTP).

6. Procédé selon l'une quelconque des revendications précédentes, dans lequel ledit message envoyé par le système de gestion comprend une requête, en particulier une requête de mise à jour relative à l'information d'alarme statique.

7. Procédé selon l'une quelconque des revendications précédentes, dans lequel le système de gestion est un système de gestion de réseau.

8. Procédé selon l'une quelconque des revendications précédentes, dans lequel l'élément de réseau répond à au moins l'un des types suivants :
- un élément géré ;
- un noeud de réseau ;
- une passerelle ;
- un commutateur ;
- un terminal ;
- un noeud relais ;
- un routeur ;
- un routeur de périphérie.

9. Dispositif pour communiquer avec un système de gestion, le dispositif comprenant une unité de processeur qui est équipée de :
- un moyen pour mettre en place une connexion entre le système de gestion et le dispositif ;
- un moyen pour recevoir un message du système de gestion en utilisant la connexion ;
- un moyen pour, suite audit message reçu du système de gestion, délivrer une information statique au système de gestion, dans lequel ladite information statique comprend une description textuelle d'au moins un événement et un identifiant pour chaque tel au moins un événement ; et
- un moyen pour notifier un événement en envoyant une information d'événement dynamique au système de gestion ensemble avec ledit identifiant pour permettre l'adressage de l'information statique au niveau du système de gestion.

10. Dispositif pour communiquer avec un élément de réseau, le dispositif comprenant une unité de processeur qui est équipée de :
- un moyen pour mettre en place une connexion entre le dispositif et l'élément de réseau ;
- un moyen pour envoyer un message à l'élément de réseau en utilisant la connexion ;
- un moyen pour, suite audit message envoyé à l'élément de réseau, recevoir de l'élément de réseau une information statique, dans lequel ladite information statique comprend une description textuelle d'au moins un événement et un identifiant pour chaque tel au moins un événement ; et
- un moyen pour notifier un événement en recevant de l'élément de réseau une information d'événement dynamique ensemble avec ledit identifiant pour permettre l'adressage de l'information statique au niveau du dispositif.

11. Système de communication comprenant au moins un de chacun des dispositifs selon les revendications 9 et 10.
